# EUROPÄISCHE PATENTSCHRIFT

(11) **EP 1 775 058 B1**
(45) Veröffentlichungstag und Bekanntmachung des Hinweises auf die Patenterteilung: **01.06.2016**
(21) Anmeldenummer: 06021254.5
(22) Anmeldetag: 10.10.2006
(51) Int. Cl.: B23K 20/12

(54) **Reibrührschweisswerkzeug mit einem rotierend angetriebenen Gegenlager zur Montage an einer Handhabungseinrichtung**
Friction stir welding tool with rotating backing means for assembly to a manipulation device
Outil de soudage par friction agitation avec support de pièce rotatif pour assemblage à un manipulateur

(30) Priorität: 11.10.2005 DE 102005049865
(43) Veröffentlichungstag der Anmeldung: 18.04.2007
(73) Patentinhaber: Helmholtz-Zentrum Geesthacht Zentrum für Material- und Küstenforschung GmbH, 21502 Geesthacht (DE)
(72) Erfinder: Loitz, Henry, 22145 Hamburg (DE); Sheikhi, Shahram, 21039 Escheburg (DE); Wulfsberg, Jens Peter, 22607 Hamburg (DE); dos Santos, Jorge F., 21395 Avendorf (DE)
(74) Vertreter: Uexküll & Stolberg

(56) Entgegenhaltungen:
- WO-A-02/098595
- DE-A1- 10 305 651
- JP-A- 2005 313 227
- US-A1- 2005 092 809

## Beschreibung

Die vorliegende Erfindung betrifft eine Reibrührschweißvorrichtung zur Montage an einer Handhabungseinrichtung, insbesondere an einem Industrieroboter.

Das Reibrührschweißen ist allgemein bereits aus dem Stand der Technik bekannt. Die WO .93/10935 offenbart beispielsweise, ein als Stift ausgebildetes Reibrührschweißwerkzeug in den Stoß zwischen aneinander angrenzende und zu verbindende Werkstücke einzuführen und diesen in Rotation zu versetzen, wobei der Stift eine größere Härte und einen höheren Schmelzpunkt als das Material der Werkstücke aufweist. Während der Rotation des Stifts werden die Werkstücke gegeneinander gepresst, sodass durch die Reibung zwischen dem Stift und den Werkstücken der Randbereich beider Werkstücke plastifiziert wird. Wird der Stift an dem Stoß entlang weiter bewegt, erstarrt das plastifizierte Material wieder, und es kann so eine Schweißnaht erzeugt werden.

Aus der WO 95/26254 ist zudem bekannt, dass neben Stumpfstoß-Verbindungen auch sogenannte Überlappstoß-Verbindungen, bei denen die zu verbindenden Werkstücke aufeinander aufliegen, mit Hilfe des Reibrührschweißens herstellt werden können. Dazu wird das Reibrührschweißwerkzeug auf die Oberfläche des einen Werkstücks aufgesetzt und in Rotation versetzt, sodass das obere Werkstück plastifiziert wird. Anschließend wird das Werkzeug so tief in das obere Werkstück gepresst, dass auch der an dem oberen Werkstück anliegende Bereich des unteren Werkstücks plastifiziert wird. Daraufhin wird das Werkzeug parallel zur Oberfläche der Werkstücke bewegt, sodass sich eine Schweißnaht bildet.

Die US 2005/092809 beschreibt eine Reibrührschweißvorrichtung zur Montage an einer Handhabungseinrichtung, mit einem Werkzeugantrieb, mit einem Befestigungselement zur Verbindung mit der Handhabungseinrichtung und mit einem Reibrührschweißwerkzeug, das durch den Werkzeugantrieb um eine Rotationsachse rotierend angetrieben ist.

In der DE 103 05 651 ist eine Reibrührschweißvorrichtung mit einem Reibrührschweißaggregat und einer getrennt davon angeordneten Werkstückhalteeinrichtung beschrieben. Hierbei ist vorgesehen, dass die Werkstückhalteeinrichtung als Werkstückvorschubeinrichtung ausgebildet ist und ein Gegenlager zur Kompensierung auftretender Reibrührnormalkräfte wirkt.

Die WO 02/098595 A1 offenbart ein Verfahren und eine Vorrichtung zum Reibrührschweißen entlang gebogener Schweißnähte auf ebenen und unebenen Oberflächen einschließlich eines Gegenlagers. Bei dem beschriebenen Verfahren kann ein Positionssensor zur Erfassung des Abstandes zwischen dem Reibrührschweißwerkzeug und der Gegenlagerrolle vorgesehen sein.

Zur Herstellung einer Reibrührschweißverbindung zwischen Werkstücken ist es üblich, die Werkstücke aufzuspannen und die Reibrührschweißvorrichtung mit dem Antrieb für das Werkzeug an einer Handhabungseinrichtung wie einem Industrieroboter aufzuhängen, sodass das rotierende Reibrührschweißwerkzeug durch den Roboter entlang der vorgesehenen Schweißnaht bewegt werden kann.

Hierbei ergibt sich jedoch das Problem, dass der Roboter sowohl die Kräfte aufnehmen muss, die durch die lineare Bewegung des Werkzeugs in der Ebene der Werkstücke zur Bildung der Schweißnaht auftreten, als auch die, die durch das Werkzeug senkrecht zur Oberfläche der Werkstücke aufgebracht werden, da die Werkstücke an einer Werkstückhalterung befestigt sind und der Roboter die "Verbindung" zwischen Werkstücken einerseits und dem Reibrührschweißwerkzeug andererseits darstellt. Insbesondere bei Überlapp-Verbindungen sind diese Kräfte außerordentlich groß, da der Roboter dann den Druck aufnehmen muss, mit dem das Werkzeug in Richtung der vorgesehenen Schweißnaht durch die Werkstücke gepresst wird. Dies macht es erforderlich, dass insbesondere bei Überlappstoß-Verbindungen die Antriebe der Roboter sehr leistungsfähig und die Roboter selbst sehr stabil ausgebildet sein müssen.

Daher liegt der vorliegenden Erfindung ausgehend vom Stand der Technik die Aufgabe zugrunde, eine Reibrührschweißvorrichtung zur Montage an einer Handhabungseinrichtung bereitzustellen, bei der während des Schweißvorgangs die Kräfte und Momente, die von der Handhabungseinrichtung bei der Bewegung des Reibrührschweißwerkzeugs entlang der Schweißnaht aufgenommen werden müssen, unabhängig von dem Schweißvorgang sind.

Erfindungsgemäß wird diese Aufgabe durch eine Reibrührschweißvorrichtung gelöst mit einem Werkzeugantrieb, mit einem Befestigungselement zur Verbindung mit der Handhabungseinrichtung, mit einem Reibrührschweißwerkzeug, das durch den Werkzeugantrieb um eine Rotationsachse rotierend angetrieben ist, mit einer Gegenlagerrolle und mit einem Gegenlagerantrieb, wobei der Gegenlagerantrieb die Gegenlagerrolle um eine Gegenlagerachse rotierend antreibt und wobei die Umfangsfläche der Gegenlagerrolle dem Reibrührschweißwerkzeug gegenüberliegend angeordnet ist.

Durch die an der Reibrührschweißvorrichtung vorgesehene Gegenlagerrolle selbst werden die Kräfte, die von dem Reibrührschweißwerkzeug senkrecht zur Oberfläche der Werkstücke auf diese ausgeübt werden, unmittelbar durch die Vorrichtung aufgenommen und müssen nicht durch die Handhabungseinrichtung aufgefangen werden. Zusätzlich sorgt der Gegenlagerantrieb, der mit der Gegenlagerrolle verbunden ist, dafür, dass auch die Kräfte, die auf die Werkstücke parallel zu deren Oberfläche ausgeübt werden, von der Vorrichtung selbst aufgenommen werden, statt sie an die Handhabungseinrichtung weiterzuleiten. Dies bedeutet, dass die Handhabungseinrichtung nur noch die Kräfte aufbringen muss, die für die Bewegung der Reibrührschweißvorrichtung selbst erforderlich sind.

Die erfindungsgemäße Reibrührschweißvorrichtung verhält sich im Betrieb nach außen kraft- und momentenneutral, was bedeutet, dass durch den Vorgang des Reibrührschweißens keine zusätzlichen Kräfte oder Drehmomente auf die Handhabungseinrichtung übertragen werden.

In einem konstruktiv einfachen und kompakten bevorzugten Aufbau der Vorrichtung ist das Befestigungselement an dem Werkzeugantrieb befestigt. Außerdem ist der Gegenlagerantrieb am Werkzeugantrieb gehalten.

Gemäß einer weiteren bevorzugten Ausführungsform verlaufen die Rotationsachse des Reibrührschweißwerkzeugs und die Gegenlagerachse in einer gemeinsamen Ebene. Dies bedeutet, dass Kräfte, die in axialer Richtung des Reibrührschweißwerkzeugs und damit im Wesentlichen senkrecht zur Oberfläche der Werkstücke auf diese ausgeübt werden, direkt auf die Gegenlagerachse wirken. Dies hat den Vorteil, dass keine Drehmomente parallel zur Gegenlagerachse auftreten, die möglicherweise Schäden am Gegenlagerantrieb verursachen könnten.

In weiter bevorzugter Weise verläuft die Rotationsachse des. Reibrührschweißwerkzeugs dabei senkrecht zur Gegenlagerachse, sodass die von dem Reibrührschweißwerkzeug in dessen axialer Richtung ausgeübten Kräfte senkrecht zur Umfangsfläche der Gegenlagerrolle wirken und die Gegenlagerrolle keiner ungleichmäßigen Belastung ausgesetzt ist.

In einer anderen bevorzugten Ausführungsform ist der Abstand zwischen dem Reibrührschweißwerkzeug und der Gegenlagerrolle veränderbar. Dadurch können die Werkstücke zum einen in einfacher Weise eingespannt werden, und zum anderen kann die Vorrichtung an die Stärke der zu verbindenden Werkstücke angepasst werden. Dabei ist in weiter bevorzugter Weise der Gegenlagerantrieb über einen Linearantrieb an dem Werkzeugantrieb gehalten, sodass der Abstand leicht einstellbar ist.

Wenn der Abstand zwischen Gegenlagerrolle und Reibrührschweißwerkzeug während des Schweißens auf einen bestimmten Wert geregelt werden soll, ist es ferner vorteilhaft, wenn ein Positionssensor zur Erfassung des Abstandes zwischen Reibrührschweißwerkzeug und Gegenlagerrolle vorgesehen ist.

Um sicherzustellen, dass die Bewegung der Handhabungseinrichtung und der Vorschub des Werkzeugs gegenüber den stationären Werkstücken synchron verläuft und nicht doch Kräfte oder Momente auf die Handhabungseinrichtung wirken, ist es außerdem bevorzugt, wenn der Gegenlagerantrieb eine Schnittstelle zur Verbindung mit der Steuerung der Handhabungseinrichtung aufweist. Dann kann die Bewegung der Handhabungseinrichtung an die der Gegenlagerrolle und damit den Vorschub angepasst werden.

Um eine homogene Schweißnaht mit einer optisch einwandfreien Oberfläche zu erreichen, weist das Reibrührschweißwerkzeug in einer anderen bevorzugten Ausführungsform einen parallel zur Rotationsachse verlaufenden Stift und eine senkrecht zum Stift verlaufende Schulter auf.

Im Folgenden wird die vorliegende Erfindung anhand einer lediglich ein bevorzugtes Ausführungsbeispiel zeigenden Zeichnung erläutert. In der Zeichnung zeigen
- Fig. 1: ein Ausführungsbeispiel einer erfindungsgemäßen Vorrichtung im Längsschnitt und
- Fig. 2: eine Überlapp-Verbindung im Querschnitt, wie sie mit der erfindungsgemäßen Vorrichtung hergestellt werden kann.

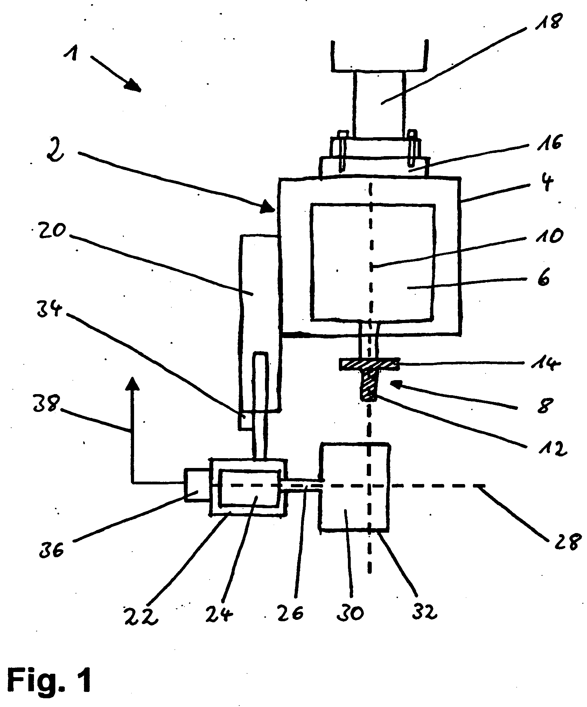

Die in Fig. 1 dargestellte Reibrührschweißvorrichtung 1 weist einen Werkzeugantrieb 2 auf, der ein Gehäuse 4 und einen darin angeordneten Motor 6 umfasst. Mit dem Motor 6 ist ein Reibrührschweißwerkzeug 8 verbunden, wobei das Reibrührschweißwerkzeug 8 von dem Werkzeugantrieb 2 um eine Rotationsachse 10 rotierend angetrieben ist. Das Reibrührschweißwerkzeug 8 umfasst einen parallel zur Rotationsachse 10 verlaufenden Stift 12 und eine sich senkrecht dazu erstreckende Schulter 14. Außerdem ist an dem Werkzeugantrieb 2 ein Befestigungselement 16 vorgesehen, über das die Vorrichtung 1 mit einem Arm 18 eines nicht näher dargestellten Industrieroboters verbunden ist.

Des Weiteren weist die Reibrührschweißvorrichtung 1 einen Linearantrieb 20 auf, der an dem Werkzeugantrieb 2 befestigt ist und über den ein Gegenlagerantrieb 22 gehalten ist. Der Gegenlagerantrieb 22 weist einen Gegenlagermotor 24 auf, dessen Motorwelle 26 die Gegenlagerachse 28 festlegt. In diesem insoweit bevorzugten Ausführungsbeispiel verlaufen die Rotationsachse 10 und die Gegenlagerachse 28 in einer gemeinsamen Ebene, sodass sich die Achsen 10, 28 schneiden. Außerdem sind die Motorwelle 26 und der Motor 6 so angebracht, dass die Rotationsachse 10 und die Gegenlagerachse 28 senkrecht zueinander verlaufen.

Durch diese Anordnung von Reibrührschweißwerkzeug 8 und Gegenlagerachse 28 wird erreicht, dass Kräfte, die in axialer Richtung des Reibrührschweißwerkzeugs 8 verlaufen, direkt auf die Gegenlagerachse 28 wirken und keine Drehmomente parallel zur Gegenlagerachse 28 auftreten.

Auf der Motorwelle 26 ist eine Gegenlagerrolle 30 angebracht, deren Umfangsfläche 32 dem Reibrührschweißwerkzeug 8 gegenüberliegt. Dabei ist die Gegenlagerrolle 30 durch den Gegenlagermotor 24 um die Gegenlagerachse 28 rotierend angetrieben. Durch den Linearantrieb 20 kann der Abstand zwischen der Gegenlagerrolle 30 und dem Reibrührschweißwerkzeug 8 verändert werden. Dazu ist der Linearantrieb 20 außerdem mit einem Positionssensor 34 versehen.

Schließlich weist der Gegenlagerantrieb 22 eine Schnittstelle 36 auf, über die der Gegenlagerantrieb 22 durch eine Leitung 38 mit einer nicht dargestellten Steuerung des Industrieroboters verbunden sein kann.

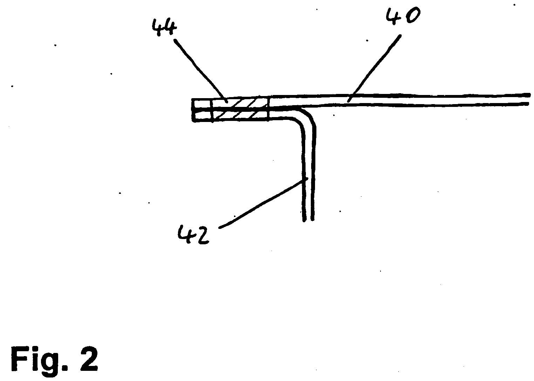

Mittels der in Fig. 1 dargestellten Vorrichtung 1 können insbesondere in Fig. 2 dargestellte Überlapp-Verbindungen zwischen einem ersten Werkstück 40 und einem zweiten Werkstück 42 hergestellt werden. Die in Fig. 2 dargestellte Anordnung der Werkstücke 40, 42 tritt beispielsweise bei Tanks für Lastkraftwagen auf. Das erste Werkstück 40 bildet dabei die Mantelfläche und das zweite Werkstück 42 eine darin eingesetzte Endfläche. Damit die Endfläche das Tankvolumen dicht abschließt, ist es erforderlich, dass eine Überlapp-Schweißnaht 44 entlang des Umfangs der Endfläche bzw. des zweiten Werkstücks 42. erstellt wird. Dies kann mittels der erfindungsgemäßen Vorrichtung 1 in folgender Weise durchgeführt werden.

Zunächst werden das erste und das zweite Werkstück 40, 42 derart zwischen dem Reibrührschweißwerkzeug 8 und der Gegenlagerrolle 30 angeordnet, dass der Bereich der zu bildenden Schweißnaht 44 oberhalb der Gegenlagerrolle 30 positioniert ist. Anschließend wird das Reibrührschweißwerkzeug 8 mittels des Werkzeugantriebs 2 in Rotation versetzt, und der Abstand zwischen Gegenlagerrolle 30 und Reibrührschweißwerkzeug 8 wird über den Linearantrieb 20 reduziert, sodass der Stift 12 in Kontakt mit dem ersten Werkstück 40 kommt, dieses durch Reibung plastifiziert wird, und der Stift 12 dann weiter in die Werkstücke 40, 42 eindringt. Wenn auch die Schulter 14 an dem ersten Werkstück 40 anliegt, wird der Linearantrieb 20 gestoppt, wobei das Erreichen dieser Position mit Hilfe des Positionssensors 34 überwacht werden kann.

Statt die Position der Gegenlagerrolle 30 in Bezug auf das Werkzeug 8 zu erfassen, ist es aber auch denkbar, den Abstand zwischen Gegenlagerrolle 30 und Werkzeug 8 über die durch den Linearantrieb 20 aufgebrachte Kraft zu regeln, wobei der Linearantrieb 20 gestoppt wird, wenn eine vorbestimmte Kraft, die durch den Linearantrieb 20 aufgebracht wird, überschritten wird. Dies kann über den von dem Linearantrieb 20 aufgenommenen Strom bestimmt werden.

Dadurch, dass die Werkstücke 40, 42 während der axialen Bewegung des Werkzeugs 8 an der Gegenlagerrolle 30 anliegen, muss der Roboterarm 18 die dafür erforderlichen Kräfte und Momente nicht aufnehmen.

Um die Überlapp-Schweißnaht entlang des Umfanges des zweiten Werkstücks 42 herzustellen, wird die Gegenlagerrolle 30 durch den Gegenlagerantrieb 22 rotierend angetrieben, sodass ein Vorschub erzeugt wird, mit dem die Vorrichtung 1 entlang der vorgesehenen Schweißnaht 44 bewegt wird. Dabei wird ein Signal, das die Vorschubgeschwindigkeit der Gegenlagerrolle 30 angibt, über die Schnittstelle 36 an die Steuerung des Industrieroboters übermittelt. Dadurch kann der Roboter die Vorrichtung 1 synchron entsprechend der Vorschubgeschwindigkeit entlang der Schweißnaht 44 bewegen. Die Kraft, die erforderlich ist, das Reibrührschweißwerkzeug 8 bzw. den Stift 12 durch das Material der Werkstücke 40, 42 zu drücken, wird dabei von dem Gegenlagerantrieb 22 aufgebracht und muss nicht von dem Roboter aufgenommen werden.

Durch die erfindungsgemäße Vorrichtung 1 mit der Gegenlagerrolle 30 und dem damit verbundenen Gegenlagerantrieb 22 werden sowohl die Kräfte senkrecht zu den Werkstücken 40, 42 als auch die während der Bewegung des Werkzeugs 8 parallel zur Oberfläche des ersten Werkstücks 40 auftretenden Kräfte und Momente direkt von der Vorrichtung 1 aufgenommen, und die im Roboter auftretenden Kräfte werden stark reduziert. Insbesondere verhält sich die Vorrichtung 1 während des Schweißens nach außen kraft- und momentenneutral, d.h. übt durch den Schweißvorgang keine zusätzlichen Kräfte auf den Roboter aus. Damit werden die Anforderungen an den Roboter hinsichtlich der Stabilität und der Leistungsfähigkeit der Antriebe deutlich reduziert.

## Patentansprüche

1. Reibrührschweißvorrichtung (1) zur Montage an einer Handhabungseinrichtung,
mit einem Werkzeugantrieb (2),
mit einem Befestigungselement (16) zur Verbindung mit der Handhabungseinrichtung, und
mit einem Reibrührschweißwerkzeug (8), das durch den Werkzeugantrieb (2) um eine Rotationsachse (10) rotierend angetrieben ist,
**gekennzeichnet durch**
eine Gegenlagerrolle (30) und
einen Gegenlagerantrieb (22),
wobei der Gegenlagerantrieb (22) die Gegenlagerrolle (30) um eine Gegenlagerachse (28) rotierend antreibt und
wobei die Umfangsfläche (32) der Gegenlagerrolle (30) dem Reibrührschweißwerkzeug (8) gegenüberliegend angeordnet ist.

2. Reibrührschweißvorrichtung nach Anspruch 1, wobei das Befestigungselement (16) an dem Werkzeugantrieb (2) befestigt ist und der Gegenlagerantrieb (22) am Werkzeugantrieb (2) gehalten ist.

3. Reibrührschweißvorrichtung nach Anspruch 1 oder 2, wobei die Rotationsachse (10) des Reibrührschweißwerkzeugs (8) und die Gegenlagerachse (28) in einer gemeinsamen Ebene verlaufen.

4. Reibrührschweißvorrichtung nach einem der Ansprüche 1 bis 3, wobei die Rotationsachse (10) des Reibrührschweißwerkzeugs (8) senkrecht zur Gegenlagerachse (28) verläuft.

5. Reibrührschweißvorrichtung nach einem der Ansprüche 1 bis 4, wobei der Abstand zwischen dem Reibrührschweißwerkzeug (8) und der Gegenlagerrolle (30) veränderbar ist.

6. Reibrührschweißvorrichtung nach Anspruch 5, wobei der Gegenlagerantrieb (22) über einen Linearantrieb (20) an dem Werkzeugantrieb (2) gehalten ist.

7. Reibrührschweißvorrichtung nach Anspruch 5 oder 6, wobei ein Positionssensor (34) zur Erfassung des Abstandes zwischen Reibrührschweißwerkzeug (8) und Gegenlagerrolle (30) vorgesehen ist.

8. Reibrührschweißvorrichtung nach einem der Ansprüche 1 bis 7, wobei der Gegenlagerantrieb (22) eine Schnittstelle (36) zur Verbindung mit der Steuerung der Handhabungseinrichtung aufweist.

9. Reibrührschweißvorrichtung nach einem der Ansprüche 1 bis 8, wobei das Reibrührschweißwerkzeug (8) einen parallel zur Rotationsachse (10) verlaufenden Stift (12) und eine senkrecht zum Stift (12) verlaufende Schulter (14) aufweist.

## Claims

1. Friction stir welding device (1) for mounting on a handling device,
with a tool drive (2),
with a mounting element (16) for connection to the handling device, and
with a friction stir welding tool (8) which is driven by the tool drive (2) in a rotating manner about an axis of rotation (10),
**characterized by**
a counter-bearing roller (30) and
a counter-bearing drive (22),
wherein the counter-bearing drive (22) is driving the counter-bearing roller (30) in a rotating manner about a counter-bearing axis (28), and
wherein the circumferential surface (32) of the counter-bearing roller (30) is arranged opposite the friction stir welding tool (8).

2. Friction stir welding device according to claim 1, wherein the mounting element (16) is fastened on the tool drive (2) and the counter-bearing drive (22) is held on the tool drive (2).

3. Friction stir welding device according to claim 1 or 2, wherein the axis of rotation (10) of the friction stir welding tool (8) and the counter-bearing axis (28) are running in a common plane.

4. Friction stir welding device according to any of claims 1 to 3, wherein the axis of rotation (10) of the friction stir welding tool (8) is running perpendicularly to the counter-bearing axis (28).

5. Friction stir welding device according to any of claims 1 to 4, wherein the distance between the friction stir welding tool (8) and the counter-bearing roller (30) is variable.

6. Friction stir welding device according to claim 5, wherein the counter-bearing drive (22) is held on the tool drive (2) by means of a linear drive (20).

7. Friction stir welding device according to claim 5 or 6, wherein a position sensor (34) for sensing the distance between the friction stir welding tool (8) and the counter-bearing roller (30) is provided.

8. Friction stir welding device according to any of claims 1 to 7, wherein the counter-bearing drive (22) has an interface (36) for connection to the control of the handling device.

9. Friction stir welding device according to any of claims 1 to 8, wherein the friction stir welding tool (8) has a pin (12) running parallel to the axis of rotation (10) and a shoulder (14) running perpendicularly to the pin (12).

## Revendications

1. Dispositif de soudage par friction-malaxage (1) destiné au montage sur un dispositif de manipulation,
comprenant un moyen d'entraînement d'outil (2),
comprenant un élément de fixation (16) pour la liaison avec le dispositif de manipulation, et
comprenant un outil de soudage par friction-malaxage (8) qui est entraîné en rotation autour d'un axe de rotation (10) par le moyen d'entraînement d'outil (2),
**caractérisé en ce qu'il comporte**
un galet de contre-appui (30) et
un moyen d'entraînement de contre-appui (22),
sachant que le moyen d'entraînement de contre-appui (22) entraîne le galet de contre-appui (30) en rotation autour d'un axe de contre-appui (28), et
sachant que la surface périphérique (32) du galet de contre-appui (30) est disposée en vis-à-vis de l'outil de soudage par friction-malaxage (8).

2. Dispositif de soudage par friction-malaxage selon la revendication 1, où l'élément de fixation (16) est fixé au moyen d'entraînement d'outil (2) et le moyen d'entraînement de contre-appui (22) est maintenu sur le moyen d'entraînement d'outil (2).

3. Dispositif de soudage par friction-malaxage selon la revendication 1 ou 2, où l'axe de rotation (10) de l'outil de soudage par friction-malaxage (8) et l'axe de contre-appui (28) s'étendent dans un même plan.

4. Dispositif de soudage par friction-malaxage selon l'une des revendications 1 à 3, où l'axe de rotation (10) de l'outil de soudage par friction-malaxage (8) s'étend perpendiculairement à l'axe de contre-appui (28).

5. Dispositif de soudage par friction-malaxage selon l'une des revendications 1 à 4, où la distance entre l'outil de soudage par friction-malaxage (8) et le galet de contre-appui (30) est modifiable.

6. Dispositif de soudage par friction-malaxage selon la revendication 5, où le moyen d'entraînement de contre-appui (22) est maintenu sur le moyen d'entraînement d'outil (2) par l'intermédiaire d'un moyen d'entraînement linéaire (20).

7. Dispositif de soudage par friction-malaxage selon la revendication 5 ou 6, où un capteur de position (34) est prévu pour la détection de la distance entre l'outil de soudage par friction-malaxage (8) et le galet de contre-appui (30).

8. Dispositif de soudage par friction-malaxage selon l'une des revendications 1 à 7, où le moyen d'entraînement de contre-appui (22) présente une interface (36) pour la connexion à la commande du dispositif de manipulation.

9. Dispositif de soudage par friction-malaxage selon l'une des revendications 1 à 8, où l'outil de soudage par friction-malaxage (8) présente une tige (12), s'étendant parallèlement à l'axe de rotation (10), et un épaulement (14) s'étendant perpendiculairement à la tige (12).
